# EUROPEAN PATENT APPLICATION

(11) **EP 3 703 026 A2**
(43) Date of publication of application: **02.09.2020**
(21) Application number: 20156425.9
(22) Date of filing: 10.02.2020
(51) Int. Cl.: G08G 1/01, G08G 1/0967

(54) **IN-VEHICLE INFORMATION PROCESSING DEVICE, INTER-VEHICLE INFORMATION PROCESSING SYSTEM, AND INFORMATION PROCESSING SYSTEM**

(30) Priority: 26.02.2019 JP 2019033103
(71) Applicant: TOYOTA JIDOSHA KABUSHIKI KAISHA, Toyota-shi, Aichi-ken 471-8571 (JP)
(72) Inventor: HAMAGAMI, Kana, Toyota-shi, Aichi-ken,, 471-8571 (JP); MAEKAWA, Takuya, Toyota-shi, Aichi-ken,, 471-8571 (JP); NAKAYAMA, Yosuke, Toyota-shi, Aichi-ken,, 471-8571 (JP); JIKUMARU, Akitoshi, Toyota-shi, Aichi-ken,, 471-8571 (JP); SUGIMURA, Tae, Toyota-shi, Aichi-ken,, 471-8571 (JP); HISHIKAWA, Takao, Toyota-shi, Aichi-ken,, 471-8571 (JP); ADACHI, Shinichi, Toyota-shi, Aichi-ken,, 471-8571 (JP)
(74) Representative: Kuhnen & Wacker Patent- und Rechtsanwaltsbüro PartG mbB

(57) **Abstract**

An in-vehicle information processing device includes: a control unit (11); a communication unit (12) that communicates with a different vehicle; and a travel environment information acquisition unit (18) that acquires information about a travel environment of a vehicle (10). When the vehicle (10) reaches a location (P) at which a traffic accident occurs, the control unit (11) transmits the information about the travel environment at the location (P), which is acquired by the travel environment information acquisition unit (18), to a following vehicle using the communication unit (12).

## Description

### BACKGROUND OF THE INVENTION

### 1. Field of the Invention

The invention relates to an in-vehicle information processing device, an inter-vehicle information processing system, and an information processing system.

### 2. Description of Related Art

There is known a technique of predicting a traffic congestion even in the case where an event that causes a traffic congestion occurs accidentally. For example, Japanese Unexamined Patent Application Publication No. 2008-084003 (JP 2008-084003 A) discloses a vehicle drive assist system that acquires, through vehicle-to-vehicle communication from different vehicles that are present on a route on which there is a cause of a traffic congestion, different vehicle information including navigation information about the position, advancing direction, etc. of the different vehicles, the travel state such as the speed of the different vehicles, and transmission source information corresponding to identification information on the different vehicles, and that calculates a traffic density on the route a predetermined time later.

### SUMMARY OF THE INVENTION

There has been a demand that, in the case where the cause of a traffic congestion is a traffic accident, for example, an occupant of a following vehicle traveling toward the location at which the traffic accident occurs should like to accurately grasp information on the traffic accident including the status of recovery from the traffic accident at the location, the time of clearance of a traffic accident congestion, etc. based on information that is different from the other vehicle information described above.

The invention provides an in-vehicle information processing device, an inter-vehicle information processing system, and an information processing system that allow an occupant of a following vehicle to accurately grasp information on a traffic accident.

A first aspect of the invention provides an in-vehicle information processing device. The in-vehicle information processing device includes: a control unit; a communication unit configured to communicate with a different vehicle; and a travel environment information acquisition unit configured to acquire information about a travel environment of a vehicle. When the vehicle reaches a location at which a traffic accident occurs, the control unit transmits the information about the travel environment at the location, which is acquired by the travel environment information acquisition unit, to a following vehicle using the communication unit.

The in-vehicle information processing device according to the first aspect may further include an input unit configured to receive an operation input by an occupant of the vehicle. The control unit may transmit the information about the travel environment at the location to the following vehicle based on information input by the occupant and acquired by the input unit at the location.

In the in-vehicle information processing device according to the first aspect, the control unit may determine, based on the information about the travel environment which is acquired by the travel environment information acquisition unit, whether the vehicle has reached the location, and may transmit the information about the travel environment at the location to the following vehicle when it is determined that the vehicle has reached the location.

In the in-vehicle information processing device according to the first aspect, the travel environment information acquisition unit may include a vehicle exterior camera that captures an image of a scene outside the vehicle; and the information about the travel environment may include a travel image of the vehicle captured by the vehicle exterior camera.

A second aspect of the invention provides an inter-vehicle information processing system. The inter-vehicle information processing system includes: a first vehicle that includes the in-vehicle information processing device according to the first aspect; and a second vehicle that includes the in-vehicle information processing device according to the first aspect. The control unit of the first vehicle transmits the information about the travel environment at the location to a following vehicle using the communication unit of the first vehicle when the first vehicle reaches the location. The control unit of the second vehicle transmits the information about the travel environment at the location to a following vehicle using the communication unit of the second vehicle when the second vehicle reaches the location after the first vehicle reaches the location.

A third aspect of the invention provides an information processing system. The information processing system includes a vehicle and a server connected to the vehicle so as to communicate with the vehicle. The vehicle acquires position information on the vehicle, and acquires information about a travel environment of the vehicle. The server calculates a time of clearance of a traffic accident congestion based on the information about the travel environment at a location, at which a traffic accident occurs, when it is determined that the vehicle has reached the location, and transmits the calculated time of clearance of the traffic accident congestion to a following vehicle.

In the information processing system according to the third aspect, the vehicle may include a vehicle exterior camera that captures an image of a scene outside the vehicle; and the information about the travel environment may include a travel image of the vehicle captured by the vehicle exterior camera.

In the information processing system according to the third aspect, the vehicle may acquire information about an occupant in a cabin of the vehicle; and the server may calculate the time of clearance of the traffic accident congestion based on the information about the occupant at the location when it is determined that the vehicle has reached the location.

In the information processing system according to the third aspect, the vehicle may include an in-cabin camera that captures an image of a scene in a cabin of the vehicle, and may acquire the information about the occupant from the image which is captured by the in-cabin camera.

In the information processing system according to the third aspect, the vehicle may acquire a travel state of the vehicle; and the server may calculate the time of clearance of the traffic accident congestion based on the travel state at the location when it is determined that the vehicle has reached the location.

With the first, second, and third aspects of the invention, the occupant of the following vehicle can grasp information on the traffic accident more accurately.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a block diagram illustrating a schematic configuration of an in-vehicle information processing device according to a first embodiment of the invention;
FIG. 2 is a flowchart illustrating an example of the flow of operation of the in-vehicle information processing device;
FIG. 3 illustrates a schematic configuration of an inter-vehicle information processing system according to a second embodiment of the invention;
FIG. 4 illustrates a schematic configuration of an information processing system according to a third embodiment of the invention;
FIG. 5 is a block diagram illustrating a schematic configuration of a server;
FIG. 6 indicates a specific example of information stored in a server storage unit of the server; and
FIG. 7 is a sequence diagram illustrating an example of the flow of operation of the information processing system.

### DETAILED DESCRIPTION OF EMBODIMENTS

Embodiments of the invention will be described below with reference to the drawings.

### First Embodiment: In-vehicle Information Processing Device

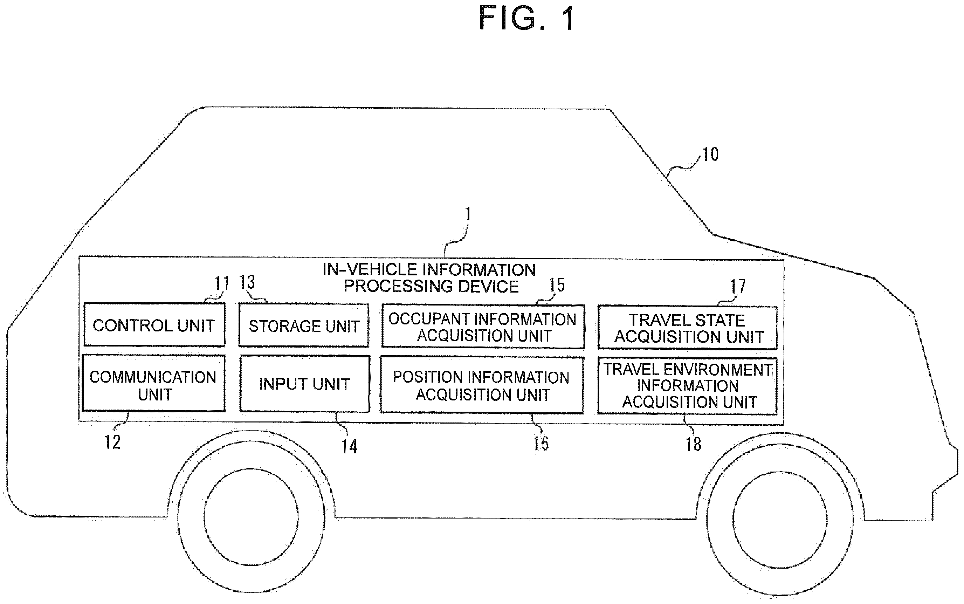

FIG. 1 is a block diagram illustrating a schematic configuration of an in-vehicle information processing device 1 according to a first embodiment of the invention. As illustrated in FIG. 1, the in-vehicle information processing device 1 is mounted on a vehicle 10.

The vehicle 10 is an automobile, for example. However, the invention is not limited thereto, and the vehicle 10 may be any vehicle that a person can ride in. The vehicle 10 is a vehicle driven by a driver. However, the invention is not limited thereto, and the vehicle 10 may be a vehicle driven autonomously, for example. The autonomous driving includes Levels 1 to 5 defined by the Society of Automotive Engineers (SAE), for example. However, the invention is not limited thereto, and the autonomous driving may be defined as desired. Passengers of the vehicle 10 include a driver and a fellow passenger of the vehicle 10. The number of passengers of the vehicle 10 may be one or more.

The in-vehicle information processing device 1 has a control unit 11, a communication unit 12, a storage unit 13, an input unit 14, an occupant information acquisition unit 15, a position information acquisition unit 16, a travel state acquisition unit 17, and a travel environment information acquisition unit 18. Such constituent units that constitute the in-vehicle information processing device 1 are connected to communicate with each other via an in-vehicle network such as a Controller Area Network (CAN) or a dedicated line, for example.

To provide an overview of the first embodiment, the in-vehicle information processing device 1 communicates with a different vehicle using the communication unit 12 with the in-vehicle information processing device 1 mounted on the vehicle 10. The in-vehicle information processing device 1 acquires information about the travel environment of the vehicle 10 using the travel environment information acquisition unit 18. When the vehicle 10 reaches a location P at which a traffic accident occurs, the in-vehicle information processing device 1 transmits the information about the travel environment at the location P, which is acquired by the travel environment information acquisition unit 18, to a following vehicle using the communication unit 12.

For example, the in-vehicle information processing device 1 acquires information input by the occupant of the vehicle 10 and acquired by the input unit 14 when the input unit 14 receives an operation input by the occupant of the vehicle 10. Examples of the input information include control information for transmitting the information about the travel environment which is acquired by the travel environment information acquisition unit 18 to a following vehicle, recognition information indicating that a traffic accident occurs at a predetermined location, etc. The in-vehicle information processing device 1 may transmit the information about the travel environment at the location P, which is acquired by the travel environment information acquisition unit 18, to a following vehicle using the communication unit 12 when information input by the occupant is acquired from the input unit 14 at the location P, for example.

For example, the in-vehicle information processing device 1 may determine, based on the information about the travel environment which is acquired by the travel environment information acquisition unit 18, whether the vehicle 10 has reached the location P at which a traffic accident occurs. That is, the in-vehicle information processing device 1 may determine, based on the information about the travel environment which is acquired by the travel environment information acquisition unit 18, whether a traffic accident is caused at the location P. The in-vehicle information processing device 1 may transmit the information about the travel environment at the location P, which is acquired by the travel environment information acquisition unit 18, to a following vehicle using the communication unit 12 when it is determined that the vehicle 10 has reached the location P at which a traffic accident occurs.

The control unit 11 has one or more processors. In the first embodiment, the "processor" is a general-purpose processor or a dedicated processor that specializes in a particular process. However, the invention is not limited thereto. An Electronic Control Unit (ECU) mounted on the vehicle 10 may function as the control unit 11. The control unit 11 is connected to the various constituent units which constitute the in-vehicle information processing device 1 so as to communicate with the constituent units, for example, and controls operation of the entire in-vehicle information processing device 1. In the first embodiment, for example, the control unit 11 acquires various types of information by controlling the acquisition units.

The communication unit 12 includes a communication module that communicates via an in-vehicle network or a dedicated line. The communication unit 12 includes a communication module that communicates with a different vehicle using a communication method such as vehicle-to-vehicle communication and road-to-vehicle communication. For example, an in-vehicle communication device such as a Data Communication Module (DCM) may function as the communication unit 12. In the first embodiment, the in-vehicle information processing device 1 is connected to a following vehicle so as to communicate therewith via the communication unit 12.

The storage unit 13 includes one or more memories. In the present embodiment, examples of the "memory" include a semiconductor memory, a magnetic memory, an optical memory, etc. However, the invention is not limited thereto. Each memory included in the storage unit 13 may function as a main storage device, an auxiliary storage device, or a cache memory, for example. The storage unit 13 stores any information to be used for operation of the in-vehicle information processing device 1. For example, the storage unit 13 may store a system program, an application program, road traffic information, road map information, various types of information acquired by the acquisitions units of the in-vehicle information processing device 1, etc.

The input unit 14 receives an operation input by the occupant of the vehicle 10. In the first embodiment, the input unit 14 includes an input interface of a car navigation system, for example. The input unit 14 receives an operation input by the occupant of the vehicle 10, and acquires information input by the occupant of the vehicle 10. The input unit 14 outputs the acquired information, which is input by the occupant of the vehicle 10, to the control unit 11.

The occupant information acquisition unit 15 acquires information about the occupant in the cabin of the vehicle 10. In the first embodiment, the occupant information acquisition unit 15 includes an in-cabin camera that captures an image of a scene in the cabin of the vehicle 10. The occupant information acquisition unit 15 acquires information about the occupant from the image which is captured by the in-cabin camera, for example. At this time, the information about the occupant includes at least one of the facial expression, face direction, line of sight, blinking state, gesture, words and actions, number of passengers, personal belongings, drive (on-board) continuation time, and attribute including age, sex, nationality, race, etc. of the occupant of the vehicle 10. The occupant information acquisition unit 15 may acquire the information about the occupants at all times, or may acquire such information regularly.

The occupant information acquisition unit 15 may acquire information about the occupant such as the facial expression, face direction, light of sight, and blinking state of the occupant from the image which is captured by the in-cabin camera using a facial recognition technology, for example. Besides, the occupant information acquisition unit 15 may acquire information about the occupant from the image which is captured by the in-cabin camera using any image recognition technology.

The configuration of the occupant information acquisition unit 15 is not limited to that described above. The occupant information acquisition unit 15 may include any other image sensor that is different from the in-cabin camera. The occupant information acquisition unit 15 may include any other sensor connected to the CAN.

For example, the occupant information acquisition unit 15 may include any sound sensor installed in the cabin of the vehicle 10 and connected to the CAN. The occupant information acquisition unit 15 may acquire information about the occupant from output information output from the sound sensor, for example. At this time, examples of the information about the occupant may include sound information due to the occupant including the content of a conversation of the occupant, voices uttered through actions of the occupant that produce other speeches, sounds produced through actions of the occupant that produce other sounds, etc.

The occupant information acquisition unit 15 may acquire information about the occupant from output information output from the sound sensor using a voice recognition technology or any other recognition technology, for example.

For example, the occupant information acquisition unit 15 may include any biological sensor installed in the cabin of the vehicle 10 and connected to the CAN. The occupant information acquisition unit 15 may acquire information about the occupant from output information output from the biological sensor, for example. At this time, examples of the information about the occupant may include a biological state of the occupant including brain waves, cerebral blood flow, blood pressure, blood sugar level, blood amino acid level, heart rate, pulse, body temperature, sensible temperature, sense of hunger, fatigue, etc.

The position information acquisition unit 16 acquires position information on the vehicle 10. In the first embodiment, the position information acquisition unit 16 includes one or more receivers corresponding to a desired satellite positioning system. For example, the position information acquisition unit 16 includes a Global Positioning System (GPS) receiver. At this time, the position information acquisition unit 16 acquires position information on the vehicle 10 based on a GPS signal. Examples of the position information include latitude, longitude, altitude, travel lane position, etc. The position information acquisition unit 16 may acquire position information on the vehicle 10 at all times, or may acquire such position information regularly.

The configuration of the position information acquisition unit 16 is not limited to that described above. The position information acquisition unit 16 may include a geomagnetic sensor, an angular acceleration sensor, etc. At this time, the position information acquisition unit 16 may acquire the orientation that the vehicle 10 faces, that is, the travel direction of the vehicle 10.

The travel state acquisition unit 17 includes any sensor connected to the CAN. Examples of the sensor may include any sensor that can acquire the travel state of the vehicle 10, such as a Light Detecting and Ranging (LIDAR), a radar, a sonar, a speed sensor, an acceleration sensor, and a steering angle sensor. The travel state acquisition unit 17 may acquire the travel state of the vehicle 10 from output information output from the sensor, for example. At this time, the travel state may include an inter-vehicle clearance, position in the travel lane, speed, acceleration, steering state, accelerator state, brake state, clutch state, gear state, blinker state, wiper state, light state, side mirror state, seat state, etc. The travel state acquisition unit 17 may acquire the travel state of the vehicle 10 at all times, or may acquire such a state regularly.

The travel environment information acquisition unit 18 acquires information about the travel environment of the vehicle 10. In the first embodiment, the travel environment information acquisition unit 18 includes a vehicle exterior camera that captures an image of a scene outside the vehicle 10. At this time, examples of the information about the travel environment include a travel image of the vehicle 10 captured by the vehicle exterior camera of the vehicle 10. The information about the travel environment is not limited thereto, and examples of such information may include any information acquired from a travel image of the vehicle 10 captured by the vehicle exterior camera of the vehicle 10. Examples of the information about the travel environment may include the presence or absence of a traffic accident vehicle, state of the traffic accident vehicle, status of arrival of an emergency vehicle, state of the travel lane, number of lanes, traffic congestion status, state of the road surface, road type, road width, traffic signal status, etc. Examples of the traffic accident vehicle include any automobile such as a passenger car and a truck. However, the invention is not limited thereto, and the traffic accident vehicle may be any vehicle that a person can ride in. The state of the traffic accident vehicle includes any state such as running off, turning over, crashed, etc. Examples of the emergency vehicle include a patrol car, an ambulance, a fire engine, a wrecker, etc. The travel environment information acquisition unit 18 may acquire the information about the travel environment at all times, or may acquire such information regularly.

The travel environment information acquisition unit 18 may acquire information about the travel environment from the travel image which is captured by the vehicle exterior camera using any image recognition technology.

The configuration of the travel environment information acquisition unit 18 is not limited to that described above. The travel environment information acquisition unit 18 may include any other sensor connected to the CAN. Examples of the sensor may include any other image sensor, sound sensor, etc. that is different from the vehicle exterior camera. The travel environment information acquisition unit 18 may acquire information about the travel environment from output information output from the sensor, for example. At this time, examples of the information about the travel environment may include information on a siren sound from an emergency vehicle etc., besides those described above.

When the vehicle 10 reaches the location P at which a traffic accident occurs, the control unit 11 transmits the information about the travel environment at the location P, which is acquired by the travel environment information acquisition unit 18, to a following vehicle using the communication unit 12. For example, the control unit 11 may transmit a travel image of the vehicle 10 at the location P, which is captured by the vehicle exterior camera which constitutes the travel environment information acquisition unit 18, to a following vehicle. The control unit 11 may transmit information about the travel environment at the location P to a following vehicle positioned within a predetermined distance. The predetermined distance may be the distance from the location P to the vicinity of the location of start of a traffic accident congestion due to the traffic accident which occurs at the location P, for example.

For example, the control unit 11 may transmit the information about the travel environment at the location P to a following vehicle when information input by the occupant is acquired from the input unit 14 at the location P. For example, the control unit 11 may determine, based on the information about the travel environment which is acquired by the travel environment information acquisition unit 18, whether the vehicle 10 has reached the location P, and transmit the information about the travel environment at the location P to a following vehicle when it is determined that the vehicle 10 has reached the location P.

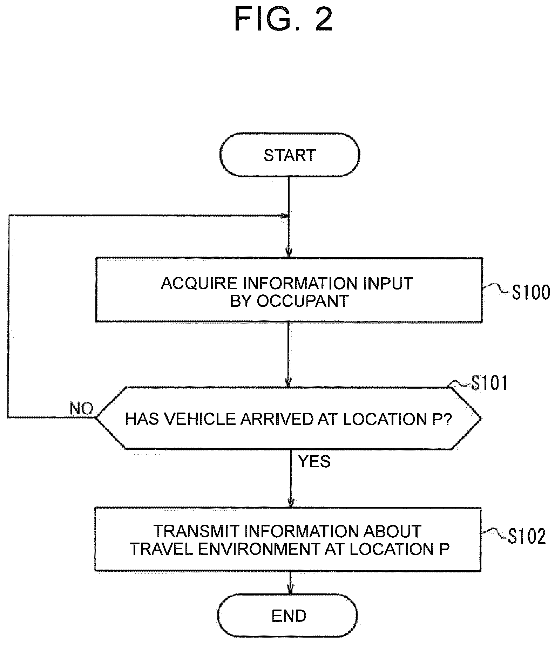

The processes executed by the control unit 11 are not limited to those described above. For example, the control unit 11 may transmit the information about the travel environment at the location P to a following vehicle based on both information input by the occupant and acquired by the input unit 14 and determination information that the vehicle 10 has reached the location P. The flow of operation for a case where the control unit 11 executes such processes, for example, is illustrated in FIG. 2.

FIG. 2 is a flowchart illustrating an example of the flow of operation of the in-vehicle information processing device 1. An example of the flow of operation of the in-vehicle information processing device 1 will be described with reference to FIG. 2.

Step S100: The control unit 11 of the in-vehicle information processing device 1 acquires information input by the occupant of the vehicle 10 from the input unit 14. For example, the control unit 11 acquires control information for transmitting the information about the travel environment, which is acquired by the travel environment information acquisition unit 18, to a following vehicle from the input unit 14.

Step S101: The control unit 11 determines, based on the information about the travel environment which is acquired by the travel environment information acquisition unit 18, whether the vehicle 10 has reached the location P at which a traffic accident occurs. If it is determined that the vehicle 10 has reached the location P at which a traffic accident occurs, the control unit 11 executes the process in step S102. If it is determined that the vehicle 10 has not reached the location P at which a traffic accident occurs, the control unit 11 returns to the process in step S100.

Step S102: If it is determined that the vehicle 10 has reached the location P at which a traffic accident occurs, the control unit 11 transmits the information about the travel environment at the location P to a following vehicle.

With the in-vehicle information processing device 1 according to the first embodiment described above, the occupant of a following vehicle is allowed to grasp information on a traffic accident accurately and in real time by transmitting the information about the travel environment at the location P, which is acquired by the travel environment information acquisition unit 18, to the following vehicle. Examples of the information on a traffic accident include information on the status at the moment of the traffic accident or immediately after the traffic accident occurs, the status of arrival of an emergency vehicle, the status of recovery from the traffic accident, the status of clearance of a traffic accident congestion, etc. The passenger of the following vehicle can also predict a traffic accident congestion at the location P, and maintain or change the travel route, based on the information about the travel environment at the location P.

For example, when information input by the occupant is acquired from the input unit 14 at the location P, the in-vehicle information processing device 1 transmits the information about the travel environment at the location P to a following vehicle. Consequently, the in-vehicle information processing device 1 can inform the occupant of the following vehicle, accurately and in real time, of information on a traffic accident at the location P based on recognition by the occupant of the vehicle 10.

For example, when it is determined that the vehicle 10 has reached the location P, the in-vehicle information processing device 1 transmits the information about the travel environment at the location P to a following vehicle. Consequently, the in-vehicle information processing device 1 can inform the occupant of the following vehicle, accurately and in real time, of information on a traffic accident at the location P based on only determination by the control unit 11, irrespective of recognition by the occupant of the vehicle 10.

For example, the in-vehicle information processing device 1 transmits the information about the travel environment at the location P to a following vehicle based on both information input by the occupant and acquired by the input unit 14 and determination information that the vehicle 10 has reached the location P. Consequently, the in-vehicle information processing device 1 can inform the occupant of the following vehicle, in real time, of information on a traffic accident at the location P as more accurate information which is based on both recognition by the occupant of the vehicle 10 and determination by the control unit 11.

The in-vehicle information processing device 1 can inform the occupant of a following vehicle, more accurately, of information on a traffic accident at the location P as visual information which is based on an image, by acquiring the information about the travel environment from a travel image of the vehicle 10 which is captured by the vehicle exterior camera. For example, the in-vehicle information processing device 1 can inform the occupant of a following vehicle, in real time, of information on a traffic accident at the location P as more accurate information, by transmitting a travel image of the vehicle 10 at the location P which is captured by the vehicle exterior camera, as it is, to the following vehicle as the information about the travel environment.

### Second Embodiment: Inter-vehicle Information Processing System

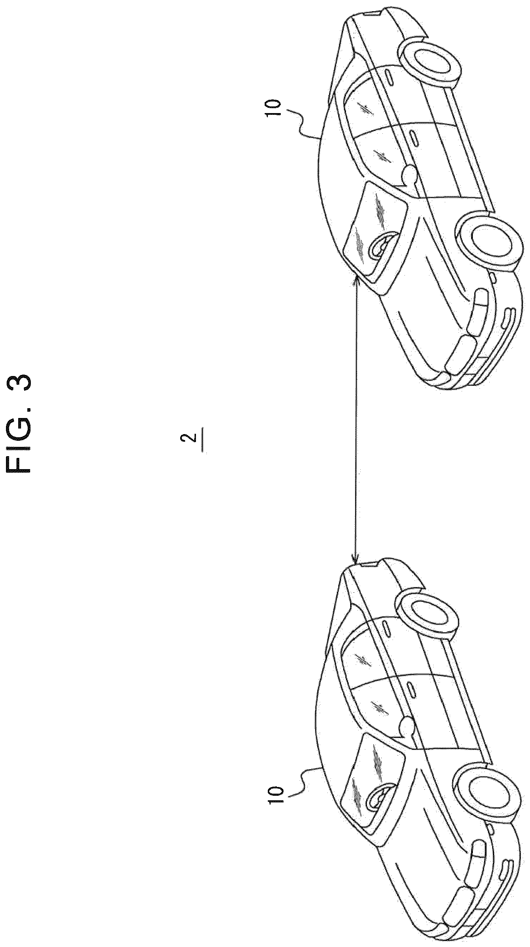

FIG. 3 illustrates a schematic configuration of an inter-vehicle information processing system 2 according to a second embodiment of the invention. The configuration and the function of the inter-vehicle information processing system 2 according to the second embodiment of the invention will be mainly described with reference to FIG. 3.

The inter-vehicle information processing system 2 has a plurality of vehicles 10. In FIG. 3, for convenience of illustration, only two vehicles 10 are illustrated. However, the inter-vehicle information processing system 2 may have three or more vehicles 10. Each of the plurality of vehicles 10 includes the in-vehicle information processing device 1 according to the first embodiment. Thus, the in-vehicle information processing device 1 included in each of the vehicles 10 has the same configuration as, and demonstrates the same function as, the in-vehicle information processing device 1 according to the first embodiment. The description of the first embodiment discussed above also applies, as it is, to each of the vehicles 10 which constitute the inter-vehicle information processing system 2 according to the second embodiment. Each of the vehicles 10 may be registered in the inter-vehicle information processing system 2 in advance, for example, in order to receive real-time distribution of information on a traffic accident achieved by the inter-vehicle information processing system 2.

When a first vehicle 10, of the vehicles 10 which constitute the inter-vehicle information processing system 2, reaches the location P at which a traffic accident occurs, the control unit 11 of the first vehicle 10 transmits the information about the travel environment at the location P, which is acquired by the travel environment information acquisition unit 18, to a following vehicle using the communication unit 12. At this time, the following vehicle may be a different vehicle 10, other than the first vehicle 10, that constitutes a part of the inter-vehicle information processing system 2, or may be any vehicle that does not constitutes a part of the inter-vehicle information processing system 2.

When a second vehicle 10, of the plurality of vehicles 10 which constitute the inter-vehicle information processing system 2, reaches the location P after the first vehicle 10 reaches the location P, the control unit 11 of second vehicle 10 transmits the information about the travel environment at the location P, which is acquired by the travel environment information acquisition unit 18, to a following vehicle using the communication unit 12. At this time, the following vehicle may be a different vehicle 10, other than the first vehicle 10 and the second vehicle 10, that constitutes a part of the inter-vehicle information processing system 2, or may be any vehicle that does not constitutes a part of the inter-vehicle information processing system 2.

With the inter-vehicle information processing system 2 according to the second embodiment described above, the information about the travel environment at the location P, which is acquired by the travel environment information acquisition unit 18, can be continuously transmitted to the following vehicle. Consequently, the occupant of the following vehicle can grasp a history of information on a traffic accident accurately and in real time. The passenger of the following vehicle can also predict a traffic accident congestion at the location P, and maintain or change the travel route, in accordance with the history of information on a traffic accident.

### Third Embodiment: Information Processing System

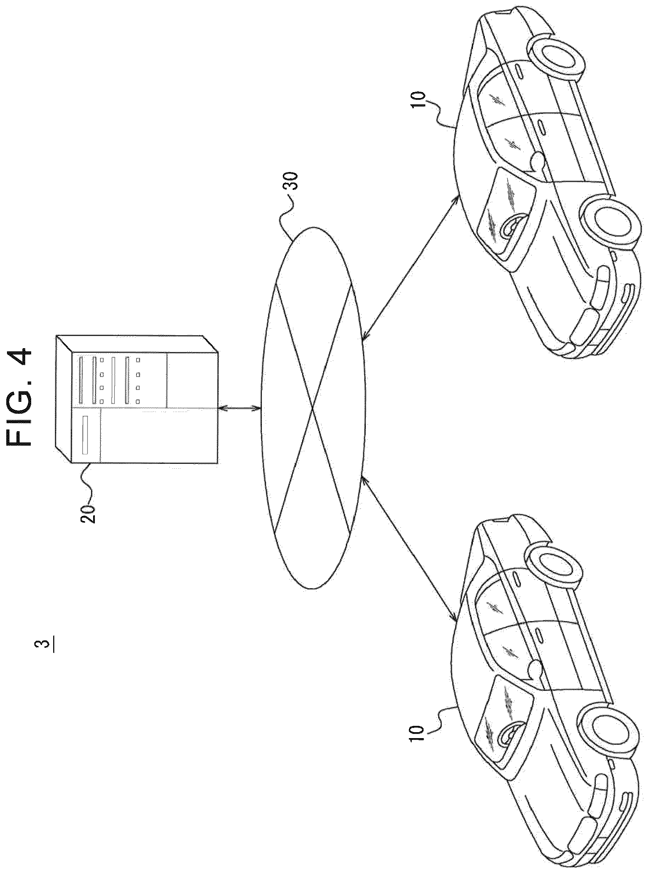

FIG. 4 illustrates a schematic configuration of an information processing system 3 according to a third embodiment of the invention. The configuration and the function of the information processing system 3 according to the third embodiment of the invention will be mainly described with reference to FIG. 4.

The information processing system 3 has the vehicle 10 which includes the in-vehicle information processing device 1 according to the first embodiment, or the plurality of vehicles 10 which constitute the inter-vehicle information processing system 2 according to the second embodiment. In FIG. 4, for convenience of illustration, only two vehicles 10 are illustrated. However, the information processing system 3 may have any number of vehicles 10, the number being one or more. The in-vehicle information processing device 1 included in the vehicle 10 has the same configuration as, and demonstrates the same function as, the in-vehicle information processing device 1 according to the first embodiment. The description of the first and second embodiments discussed above also applies, as it is, to the vehicles 10 which constitute the information processing system 3 according to the third embodiment. The vehicles 10 may be registered in the information processing system 3 in advance, for example, in order to receive real-time distribution of information on a traffic accident achieved by the information processing system 3.

The information processing system 3 has a server 20 in addition to the vehicles 10. Each of the vehicles 10 and the server 20 are connected to a network 30 that includes a mobile communication network, the Internet, etc., for example, so as to communicate with each other. For example, the vehicles 10 and the server 20 are connected to each other via the network 30 so as to communicate with each other. For example, the control unit 11 of the vehicle 10 controls the communication unit 12, and transmits the various types of acquired information to the server 20 via the network 30.

The server 20 is a general-purpose information processing device that has a function as a server device, for example. The server 20 is not limited thereto, and may be a different information processing device dedicated to the information processing system 3. The server 20 includes one or a plurality of information processing devices that can communicate with each other, for example. In FIG. 4, for convenience of illustration, only one information processing device that constitutes the server 20 is illustrated.

Next, the components of the information processing system 3 will be described in detail. Differences of the in-vehicle information processing device 1 which is mounted on the vehicles 10 which constitute the information processing system 3 from that according to the first embodiment will be described mainly.

The communication unit 12 includes a communication module connected to the network 30. For example, the communication unit 12 may include a communication module that supports a mobile communication standard such as 4th Generation (4G) and 5th Generation (5G). In the third embodiment, the vehicles 10 are each connected to the network 30 via the communication unit 12.

In the third embodiment, the information stored in the storage unit 13 described above may be updated based on information acquired from the network 30 via the communication unit 12, for example.

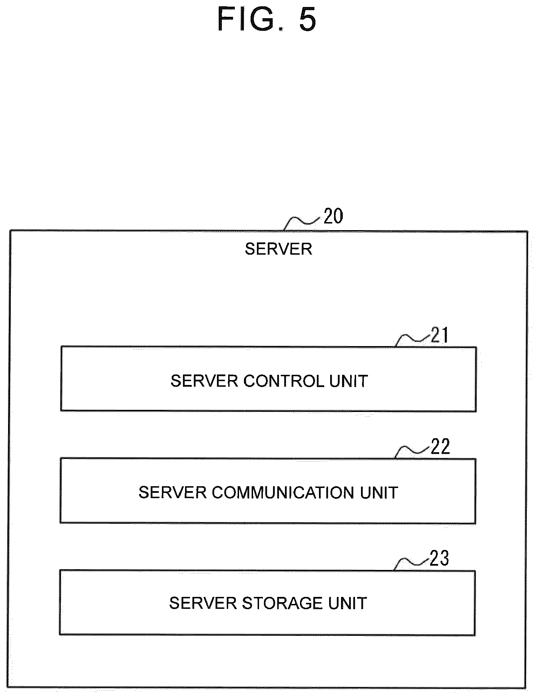

FIG. 5 is a block diagram illustrating a schematic configuration of the server 20. As illustrated in FIG. 5, the server 20 has a server control unit 21, a server communication unit 22, and a server storage unit 23.

The server control unit 21 has one or more processors. The server control unit 21 is connected to the various constituent units which constitute the server 20, and controls operation of the entire server 20. For example, the server control unit 21 controls the server communication unit 22, and acquires various types of information from the vehicles 10 via the network 30. For example, the server control unit 21 controls the server storage unit 23, and stores information that is necessary for operation of the information processing system 3 in the server storage unit 23.

The server communication unit 22 includes a communication module connected to the network 30. For example, the server communication unit 22 may include a communication module that supports a wired Local Area Network (LAN) standard. In the third embodiment, the server 20 is connected to the network 30 via the server communication unit 22.

The server storage unit 23 includes one or more memories. Each memory included in the server storage unit 23 may function as a main storage device, an auxiliary storage device, or a cache memory, for example. The server storage unit 23 stores any information to be used for operation of the server 20. The information stored in the server storage unit 23 may be updated based on information acquired from the network 30 via the server communication unit 22, for example. For example, the server storage unit 23 may store a system program, an application program, road traffic information, road map information, various types of information acquired by the acquisitions units of the vehicle 10, etc.

The server storage unit 23 stores other information that is necessary for operation of the information processing system 3. For example, the server storage unit 23 stores the time of clearance of a traffic accident congestion to be discussed later, which is calculated by the information processing system 3, and various types of information for calculating the time of clearance of the traffic accident congestion. Examples of the various types of information include position information on the location P at which a traffic accident occurs. Examples of the various types of information include the time when each of the vehicles 10 has reached the location P at which a traffic accident occurs and vehicle information on the corresponding vehicle 10. Examples of the various types of information include the information about the travel environment at the location P which is acquired by the travel environment information acquisition unit 18, the information about the occupant at the location P which is acquired by the occupant information acquisition unit 15, and the travel state of the vehicle 10 at the location P which is acquired by the travel state acquisition unit 17. The various types of information may be managed as big data by collecting all the data obtained when the plurality of vehicles 10 travel at a plurality of locations P at the server 20, for example.

The server control unit 21 determines, based on the position information on the vehicle 10 which is acquired by the position information acquisition unit 16, whether the vehicle 10 has reached the location P at which a traffic accident occurs while referring to the road map information which is stored in the server storage unit 23. If it is determined that the vehicle 10 has reached the location P at which a traffic accident occurs, for example, the server control unit 21 calculates the time of clearance of a traffic accident congestion based on the information about the travel environment at the location P which is acquired by the travel environment information acquisition unit 18.

The method for the server control unit 21 to calculate the time of clearance of a traffic accident congestion is not limited to that described above. The server control unit 21 may calculate the time of clearance of a traffic accident congestion in accordance with at least one of the information about the occupant of the vehicle 10 at the location P which is acquired by the occupant information acquisition unit 15 and the travel state of the vehicle 10 at the location P which is acquired by the travel state acquisition unit 17, in addition to the information about the travel environment.

The server control unit 21 calculates the time of clearance of a traffic accident congestion through machine learning, for example. The server control unit 21 may have a component for a desired learning process in order to execute such a calculation process. The server control unit 21 may execute such a calculation process continuously each time the vehicles 10 reach the location P at which a traffic accident occurs, for example.

The server communication unit 22 may transmit the time of clearance of a traffic accident congestion which is calculated by the server control unit 21 to a following vehicle. At this time, the following vehicle may be a different vehicle 10 that constitutes a part of the information processing system 3, or may be any vehicle that does not constitutes a part of the information processing system 3. The server communication unit 22 may transmit the time of clearance of a traffic accident congestion to a following vehicle positioned within a predetermined distance. The predetermined distance may be the distance from the location P to the vicinity of the location of start of a traffic accident congestion due to the traffic accident which occurs at the location P, for example.

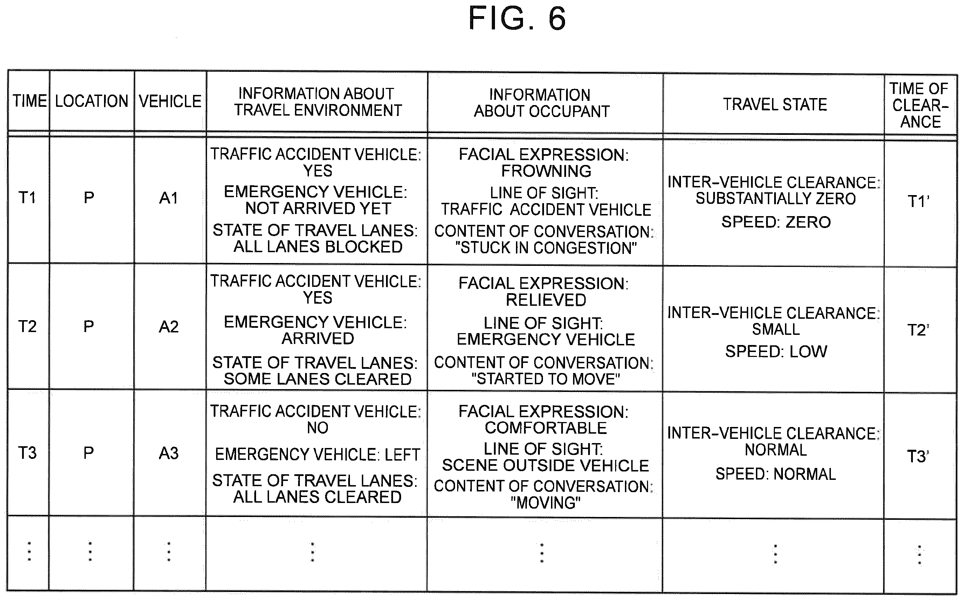

FIG. 6 indicates a specific example of information stored in the server storage unit 23 of the server 20. The information stored in the server storage unit 23 of the server 20 will be described more specifically with reference to FIG. 6. In FIG. 6, for convenience of illustration, only one location P at which a traffic accident occurs is indicated, and three vehicles 10 reach the location P. However, the invention is not limited thereto, and the server storage unit 23 may store a plurality of locations P at which a traffic accident occurs, and any number of vehicles 10 may reach each location P.

For example, a vehicle A1 reaches a location P at which a traffic accident occurs. The vehicle A1 reaches the location P at which the traffic accident occurs at time T1. At this time, the travel environment information acquisition unit 18 of the vehicle A1 acquires a travel image of the vehicle A1 at the location P captured by the vehicle exterior camera of the vehicle A1. The travel environment information acquisition unit 18 of the vehicle A1 also acquires, from the travel image of the vehicle A1 at the location P, the presence or absence of a traffic accident vehicle, the status of arrival of an emergency vehicle, and the state of the travel lane, for example. For example, at time T1, the traffic accident vehicle is present at the location P, an emergency vehicle has not arrived yet, and all of a plurality of travel lanes are blocked by the traffic accident vehicle.

At this time, the occupant information acquisition unit 15 of the vehicle A1 acquires, as information about the occupant of the vehicle A1 at the location P, the facial expression, line of sight, and content of a conversation of the occupant, for example. For example, at time T1, the occupant information acquisition unit 15 acquires, from an image captured by the in-cabin camera of the vehicle A1, the facial expression of the occupant who is frowning and the line of sight of the occupant which is directed toward the traffic accident vehicle at the location P. Similarly, the occupant information acquisition unit 15 acquires, from output information output from the sound sensor of the vehicle A1, the content of a conversation of the occupant who says, "The car is stuck in the congestion," at the location P.

At this time, the travel state acquisition unit 17 of the vehicle A1 acquires, as the travel state of the vehicle A1 at the location P, the inter-vehicle clearance and the speed, for example. For example, at time T1, the travel state acquisition unit 17 acquires the inter-vehicle clearance at the location P being substantially zero from output information output from the LIDAR of the vehicle A1. Similarly, the travel state acquisition unit 17 acquires the speed of the vehicle A1 at the location P being zero from output information output from the speed sensor of the vehicle A1.

The server control unit 21 calculates the time of clearance of a traffic accident congestion as T1' through machine learning based on the information about the travel environment, the information about the occupant, and the travel state, for example. For example, at time T1, which is immediately after the traffic accident occurs and at which an emergency vehicle has not arrived yet, the difference between the time of clearance T1' of the traffic accident congestion and the time T1 is large. The server communication unit 22 transmits the time of clearance T1' of the traffic accident congestion which is calculated by the server control unit 21 to a following vehicle.

For example, a vehicle A2 reaches the location P at which the traffic accident occurs. The vehicle A2 reaches the location P at which the traffic accident occurs at time T2. At this time, the travel environment information acquisition unit 18 of the vehicle A2 acquires a travel image of the vehicle A2 at the location P captured by the vehicle exterior camera of the vehicle A2. The travel environment information acquisition unit 18 of the vehicle A2 also acquires, from the travel image of the vehicle A2 at the location P, the presence or absence of a traffic accident vehicle, the status of arrival of an emergency vehicle, and the state of the travel lane, for example. For example, at time T2, the traffic accident vehicle is present at the location P, an emergency vehicle has arrived, and some of the travel lanes are not blocked by the traffic accident vehicle any more.

At this time, the occupant information acquisition unit 15 of the vehicle A2 acquires, as information about the occupant of the vehicle A2 at the location P, the facial expression, line of sight, and content of a conversation of the occupant, for example. For example, at time T2, the occupant information acquisition unit 15 acquires, from an image captured by the in-cabin camera of the vehicle A2, the facial expression of the occupant who seems relieved and the line of sight of the occupant which is directed toward the emergency vehicle at the location P. Similarly, the occupant information acquisition unit 15 acquires, from output information output from the sound sensor of the vehicle A2, the content of a conversation of the occupant who says, "The car has started moving," at the location P.

At this time, the travel state acquisition unit 17 of the vehicle A2 acquires, as the travel state of the vehicle A2 at the location P, the inter-vehicle clearance and the speed, for example. For example, at time T2, the travel state acquisition unit 17 acquires the inter-vehicle clearance at the location P being small from output information output from the LIDAR of the vehicle A2. Similarly, the travel state acquisition unit 17 acquires the speed of the vehicle A2 at the location P being low from output information output from the speed sensor of the vehicle A2.

The server control unit 21 calculates the time of clearance of the traffic accident congestion as T2' through machine learning based on the information about the travel environment, the information about the occupant, and the travel state, for example. For example, at time T2, at which the situation has recovered from the traffic accident to some degree and the emergency vehicle has already arrived, the difference between the time of clearance T2' of the traffic accident congestion and the time T2 is smaller than the difference between the time of clearance T1' and the time T1. The time of clearance T2' may be earlier or later than, or may be the same as, the time of clearance T1', depending on the timing of calculation by the server control unit 21. The server communication unit 22 transmits the time of clearance T2' of the traffic accident congestion which is calculated by the server control unit 21 to a following vehicle.

For example, a vehicle A3 reaches the location P at which the traffic accident occurs. The vehicle A3 reaches the location P at which the traffic accident occurs at time T3. At this time, the travel environment information acquisition unit 18 of the vehicle A3 acquires a travel image of the vehicle A3 at the location P captured by the vehicle exterior camera of the vehicle A3. The travel environment information acquisition unit 18 of the vehicle A3 also acquires, from the travel image of the vehicle A3 at the location P, the presence or absence of a traffic accident vehicle, the status of arrival of an emergency vehicle, and the state of the travel lane, for example. For example, at time T3, the traffic accident vehicle has been removed from the location P, the emergency vehicle has left, and none of the travel lanes are blocked by the traffic accident vehicle any more.

At this time, the occupant information acquisition unit 15 of the vehicle A3 acquires, as information about the occupant of the vehicle A3 at the location P, the facial expression, line of sight, and content of a conversation of the occupant, for example. For example, at time T3, the occupant information acquisition unit 15 acquires, from an image captured by the in-cabin camera of the vehicle A3, the facial expression of the occupant who seems comfortable and the line of sight of the occupant which is directed toward a scene outside the vehicle at the location P. Similarly, the occupant information acquisition unit 15 acquires, from output information output from the sound sensor of the vehicle A3, the content of a conversation of the occupant who says, "The car is moving," at the location P.

At this time, the travel state acquisition unit 17 of the vehicle A3 acquires, as the travel state of the vehicle A3 at the location P, the inter-vehicle clearance and the speed, for example. For example, at time T3, the travel state acquisition unit 17 acquires the inter-vehicle clearance at the location P being normal from output information output from the LIDAR of the vehicle A3. Similarly, the travel state acquisition unit 17 acquires the speed of the vehicle A3 at the location P being normal from output information output from the speed sensor of the vehicle A3.

The server control unit 21 calculates the time of clearance of a traffic accident congestion as T3' through machine learning based on the information about the travel environment, the information about the occupant, and the travel state, for example. For example, at time T3, at which the situation has recovered from the traffic accident and the emergency vehicle has already left, the difference between the time of clearance T3' of the traffic accident congestion and the time T3 is further smaller than the difference between the time of clearance T2' and the time T2. The time of clearance T3' may be earlier or later than, or may be the same as, the times of clearance T1' and T2', depending on the timing of calculation by the server control unit 21. The server communication unit 22 transmits the time of clearance T3' of the traffic accident congestion which is calculated by the server control unit 21 to a following vehicle.

The server storage unit 23 retains information associated with each time at the location P even after the latest time of clearance of the traffic accident congestion is transmitted to a following vehicle, in order to enable the server control unit 21 to similarly calculate the time of clearance of a traffic accident congestion through machine learning in a different traffic accident that may occur in the future. The server storage unit 23 is not limited thereto, and may erase information associated with a time that is earlier than transmission of the latest time of clearance of the traffic accident congestion to a following vehicle when the server communication unit 22 transmits such a time of clearance.

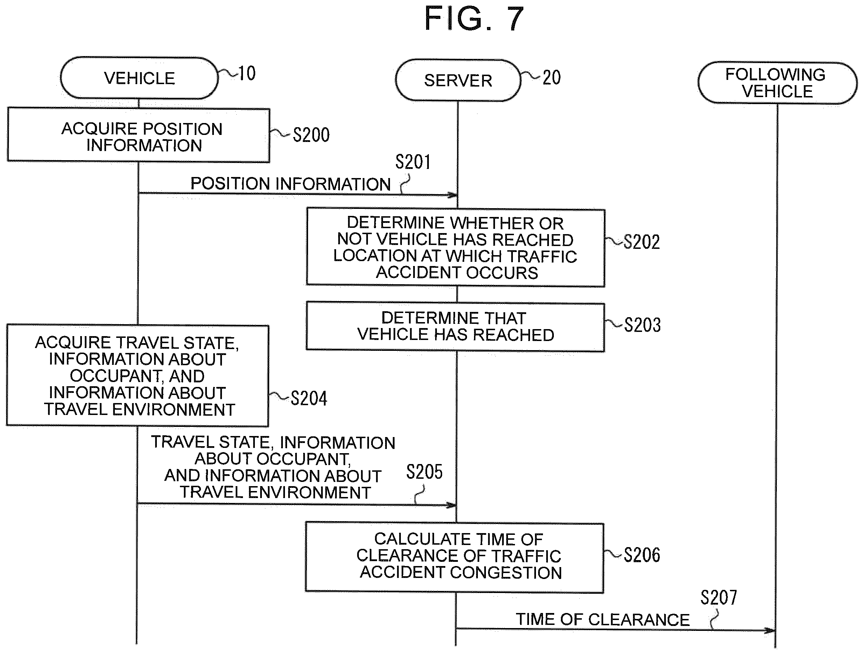

FIG. 7 is a sequence diagram illustrating an example of the flow of operation of the information processing system 3. An example of the flow of operation of the information processing system 3 will be described with reference to FIG. 7.

Step S200: The control unit 11 of the vehicle 10 acquires position information on the vehicle 10 using the position information acquisition unit 16.

Step S201: The control unit 11 of the vehicle 10 transmits the position information on the vehicle 10, which is acquired in step S200, to the server 20 using the communication unit 12.

Step S202: The server control unit 21 of the server 20 determines, based on the position information on the vehicle 10 which is acquired in step S200, whether the vehicle 10 has reached the location P at which a traffic accident occurs.

Step S203: The server control unit 21 of the server 20 determines that the vehicle 10 has reached the location P at which a traffic accident occurs.

Step S204: The control unit 11 of the vehicle 10 acquires the travel state of the vehicle 10 at the location P using the travel state acquisition unit 17. The control unit 11 of the vehicle 10 acquires information about the occupant in the cabin of the vehicle 10 using the occupant information acquisition unit 15. The control unit 11 of the vehicle 10 acquires information about the travel environment of the vehicle 10 using the travel environment information acquisition unit 18.

Step S205: The control unit 11 of the vehicle 10 transmits the travel state of the vehicle 10, the information about the occupant, and the information about the travel environment, which are acquired in step S204, to the server 20 using the communication unit 12.

For example, the server control unit 21 of the server 20 acquires each of the travel state of the vehicle 10, the information about the occupant, and the information about the travel environment immediately after step S203. The timing for the server control unit 21 of the server 20 to acquire such information is not limited to that described above. The server control unit 21 of the server 20 may acquire such information at all times, or may acquire such information collectively in step S201, or may acquire such information at other appropriate timings.

Step S206: The server control unit 21 of the server 20 calculates the time of clearance of the traffic accident congestion based on the travel state of the vehicle 10, the information about the occupant, and the information about the travel environment, which are acquired in step S205.

Step S207: The server control unit 21 of the server 20 transmits the time of clearance of the traffic accident congestion, which is calculated in step S206, to a following vehicle.

With the information processing system 3 according to the third embodiment described above, the occupant of a following vehicle is allowed to grasp information on a traffic accident accurately and in real time by calculating the time of clearance of a traffic accident congestion based on the information about the travel environment at the location P and transmitting the calculated time of clearance of the traffic accident congestion to the following vehicle. The information on a traffic accident includes the time of clearance of a traffic accident congestion. The information processing system 3 can predict the time of clearance precisely in accordance with the travel environment at the location P. In addition, the information processing system 3 can calculate the time of clearance in real time and continuously by acquiring the information about the travel environment from the vehicles 10 which have reached the location P and calculating the time of clearance for each piece of such information. The passenger of a following vehicle can continuously grasp the latest time of clearance of the traffic accident congestion, and can appropriately determine to maintain or change the travel route.

For example, in the case where the information about the travel environment is a travel image of the vehicle 10 captured by the vehicle exterior camera, the information processing system 3 can accurately acquire the travel environment at the location P using visual information based on the travel image. Consequently, the precision in estimating the time of clearance of a traffic accident congestion based on machine learning is improved.

The information processing system 3 can predict the time of clearance of a traffic accident congestion more precisely in consideration of the reaction of the occupant to a traffic accident by calculating the time of clearance based on the information about the occupant at the location P in addition to the information about the travel environment. The information processing system 3 can calculate the time of clearance of a traffic accident congestion based on a diversity of information including not only the situation outside the vehicle but also the situation of the occupant in the cabin.

The information processing system 3 can acquire information about the occupant at the location P based on visual information by acquiring information about the occupant from an image captured by the in-cabin camera. The information processing system 3 can calculate the time of clearance of a traffic accident congestion based on information about the occupant as visual information.

The information processing system 3 can acquire a variety of information about the occupant of the vehicle 10 that cannot be acquired from visual information by acquiring information about the occupant from output information output from any sensor that can acquire information about the occupant. For example, the information processing system 3 can acquire sound information due to the occupant that cannot be acquired from visual information from output information output from a sound sensor. For example, the information processing system 3 can acquire subtle variations in feeling that cannot be acquired from visual information as the biological state of the occupant from output information output from a biological sensor.

The information processing system 3 can predict the time of clearance of a traffic accident congestion more precisely in consideration of the travel state of the vehicle 10 related to a traffic accident by calculating the time of clearance based on the travel state of the vehicle 10 at the location P in addition to the information about the travel environment. The information processing system 3 can calculate the time of clearance of a traffic accident congestion based on a diversity of information including not only the situation outside the vehicle but also the travel state of the vehicle 10.

The invention has been described based on the drawings and the embodiments. It should be noted that a person skilled in the art could easily make a variety of modifications and corrections based on the present disclosure. Thus, it should be noted that such modifications and corrections fall within the scope of the invention. For example, the functions etc. included in the units or the steps can be rearranged unless such functions etc. do not logically contradict with each other, and a plurality of units or steps can be combined with each other or divided.

For example, in the first to third embodiments discussed above, each of the constituent units of the in-vehicle information processing device 1 is mounted on the vehicle 10. However, a configuration is also possible in which a part or all of the processing operation executed by each of the constituent units of the in-vehicle information processing device 1 is executed by a desired electronic device such as a smartphone or a computer, for example.

A configuration is also possible in which a general-purpose electronic device such as a smartphone or a computer occurs to function as each of the constituent units of the in-vehicle information processing device 1 according to the first to third embodiments discussed above or the server 20 according to the third embodiment, for example. For example, a program that describes the content of a process that implements the function of the communication unit 12 etc. according to the first to third embodiments is stored in a memory of the electronic device, and a processor of the electronic device occurs to read and execute the program. Thus, the invention according to the first to third embodiments can be implemented also as a program that can be executed by a processor.

In the third embodiment discussed above, as in the first and second embodiments, the in-vehicle information processing device 1 may transmit the information about the travel environment at the location P to a following vehicle. However, the invention is not limited to such a configuration. The information processing system 3 may acquire the information about the travel environment at the location P from the vehicle 10 and transmit such information to a following vehicle, in place of or in addition to the in-vehicle information processing device 1.

In the third embodiment discussed above, the server 20 of the information processing system 3 calculates the time of clearance of a traffic accident congestion. However, the constituent unit that executes such a calculation process is not limited thereto. The control unit 11 of the in-vehicle information processing device 1 which is mounted on the vehicle 10 may calculate the time of clearance of a traffic accident congestion, in place of or in addition to the server 20.

## Claims

1. An in-vehicle information processing device comprising:
a control unit (11);
a communication unit (12) configured to communicate with a different vehicle; and
a travel environment information acquisition unit (18) configured to acquire information about a travel environment of a vehicle (10), wherein
when the vehicle (10) reaches a location (P) at which a traffic accident occurs, the control unit (11) transmits the information about the travel environment at the location (P), which is acquired by the travel environment information acquisition unit (18), to a following vehicle using the communication unit (12).

2. The in-vehicle information processing device according to claim 1, further comprising:
an input unit (14) configured to receive an operation input by an occupant of the vehicle (10), wherein
the control unit (11) transmits the information about the travel environment at the location (P) to the following vehicle based on information input by the occupant and acquired by the input unit (14) at the location (P).

3. The in-vehicle information processing device according to claim 1 or 2, wherein the control unit (11)
determines, based on the information about the travel environment which is acquired by the travel environment information acquisition unit (18), whether the vehicle (10) has reached the location (P), and
transmits the information about the travel environment at the location (P) to the following vehicle when it is determined that the vehicle (10) has reached the location (P).

4. The in-vehicle information processing device according to any one of claims 1 to 3, wherein:
the travel environment information acquisition unit (18) includes a vehicle exterior camera that captures an image of a scene outside the vehicle (10); and
the information about the travel environment includes a travel image of the vehicle (10) captured by the vehicle exterior camera.

5. An inter-vehicle information processing system comprising:
a first vehicle that includes the in-vehicle information processing device according to any one of claims 1 to 4; and
a second vehicle that includes the in-vehicle information processing device according to any one of claims 1 to 4, wherein:
the control unit (11) of the first vehicle transmits the information about the travel environment at the location (P) to a following vehicle using the communication unit (12) of the first vehicle when the first vehicle reaches the location (P); and
the control unit (11) of the second vehicle transmits the information about the travel environment at the location (P) to a following vehicle using the communication unit (12) of the second vehicle when the second vehicle reaches the location (P) after the first vehicle reaches the location (P).

6. An information processing system comprising:
a vehicle (10); and
a server (20) connected to the vehicle (10) so as to communicate with the vehicle (10), wherein:
the vehicle (10)
acquires position information on the vehicle (10), and
acquires information about a travel environment of the vehicle (10); and
the server (20)
calculates a time of clearance of a traffic accident congestion based on the information about the travel environment at a location (P), at which a traffic accident occurs, when it is determined that the vehicle (10) has reached the location (P), and
transmits the calculated time of clearance of the traffic accident congestion to a following vehicle.

7. The information processing system according to claim 6, wherein:
the vehicle (10) includes a vehicle exterior camera that captures an image of a scene outside the vehicle (10); and
the information about the travel environment includes a travel image of the vehicle (10) captured by the vehicle exterior camera.

8. The information processing system according to claim 6 or 7, wherein:
the vehicle (10) acquires information about an occupant in a cabin of the vehicle (10); and
the server (20) calculates the time of clearance of the traffic accident congestion based on the information about the occupant at the location (P) when it is determined that the vehicle (10) has reached the location (P).

9. The information processing system according to claim 8, wherein
the vehicle (10) includes an in-cabin camera that captures an image of a scene in a cabin of the vehicle (10), and acquires the information about the occupant from the image which is captured by the in-cabin camera.

10. The information processing system according to any one of claims 6 to 9, wherein:
the vehicle (10) acquires a travel state of the vehicle (10); and
the server (20) calculates the time of clearance of the traffic accident congestion based on the travel state at the location (P) when it is determined that the vehicle (10) has reached the location (P).
